# EUROPEAN PATENT APPLICATION

(11) **EP 4 400 824 A1**
(43) Date of publication of application: **17.07.2024**
(21) Application number: 23382024.0
(22) Date of filing: 13.01.2023
(51) Int. Cl.: G01M 10/00

(54) **PHYSICAL MODELLING OF THE BEHAVIOUR IN A FLOW OF OBJECTS WHOSE DIMENSIONS ARE SMALLER THAN THE SPATIAL SCALE OF VARIATION OF THE FLOW**

(71) Applicant: Fundación Tecnalia Research & Innovation, 48160 Derio - Bizkaia (ES); Universidad del Pais Vasco, 48940 Leioa, Bizkaia (ES)
(72) Inventor: Berque, Joannès, Derio (BIZKAIA) (ES); Fernandez Guerrero, Maria Luisa, Derio (BIZKAIA) (ES); Touzon Gonzalez, Imanol, Derio (BIZKAIA) (ES); Blanco Ilzarbe, Jesus Mª, Leioa (BIZKAIA) (ES); Bidaguren Diego, Iñigo, Leioa (BIZKAIA) (ES)
(74) Representative: Balder IP Law, S.L.

(57) **Abstract**

A method and apparatus to generate wave motion near an object, and wave forces on the object, without generating a real wave. In particular, for the physical modelling of marine structures within long waves. Within a volume that is small relative to the wavelength, wave motion is approximately uniform. This uniform motion is reproduced by moving a container like the water particles in a real wave. In many cases, this method can replace the existing approach of exciting a wave in a fixed container. In such cases, significant savings may be expected relative to current wave testing facilities. More generally, the method of physically simulating only a small, near-uniform subset of a field, when that is the part of the field of interest, can be applied to other problems.

## Description

### TECHNICAL FIELD

The present invention is encompassed within the field of physical modelling of the behaviour in a flow of objects whose dimensions are smaller than the spatial scale of variation of the flow.

### BACKGROUND

Physical modelling of marine structures and hydrodynamic loads remains an important and costly step in engineering and design. Wave loads in particular remain difficult to accurately model numerically. Unfortunately, heretofore the physical modelling of wave motion, and hence of wave loads on structures, has relied on exciting and producing real waves. The physics of water waves then impose the use of large and costly facilities.

As offshore renewable energy becomes essential to many more countries, there is renewed interest in improving and lowering the cost of hydrodynamic testing for marine structures. Faster, cheaper physical modelling of the wave-response of novel marine structures would no doubt accelerate innovation for offshore renewables.

### LIMITATIONS IN THE STATE OF THE ART

There are many forms of hydrodynamic testing of scaled physical models of marine or aquatic structures. The most relevant one to this invention is that based on large wave basins, which is reviewed first. Other forms of hydrodynamic testing must however also be discussed in order to present the novelty of the method disclosed herein, and so will be discussed after wave basins.

### Wave basins

To this day, the physical modelling of wave-structure interaction requires the excitation of real waves. The volume required by the physics of real water waves are the underlying reason for the high cost of testing campaigns. A host of challenges face designers of new marine structures when it comes to hydrodynamic testing, typically including the following:
- Cost: a wave basin testing campaign is often the paywall that many new concepts cannot afford.
- Space: the basins for modelling real propagating waves must be very large, typically the size of a large swimming pool.
- Depth: real water waves are strongly affected by the presence of the seafloor or basin floor as soon as depth is less than about one wavelength, so large depths are required in test basins to adequately model wave motion in deep water.
- Energy use: exciting waves throughout large pools requires much energy.
- Wave size: real waves typically break when their height reaches 70% of a basin's depth, so modelling larger waves is not possible.
- Reaching the model: the inconvenience of having physical models in the middle of a large pool means setup is long and skill-intensive, and any improvement and modification to onboard instrumentation, weight distribution or any of the experimental setup requires suspension for hours of the testing campaign. In a high day-rate facility.

Much if not all of these challenges are imposed by the physics of generating, propagating, and dissipating real waves in a water basin. And indeed no method has been developed heretofore to physically model wave-structure interaction without using real waves.

The rest of this section describes the physics of how the current method of exciting real waves to model waves underlies all these limitations. These will be known by those familiar with the art of hydrodynamic testing.

Modelling wave loads on structures involves first reproducing the motion of water in waves. For this, reduced-scale but "real" water waves are excited in a wave basin, and these propagate towards the structure to be tested. While there has been much progress in the ways these waves are generated, propagated, reflected, dissipated, measured, and many other aspects, the basic physical situation remains that a real water wave is excited and propagated in the wave tank.

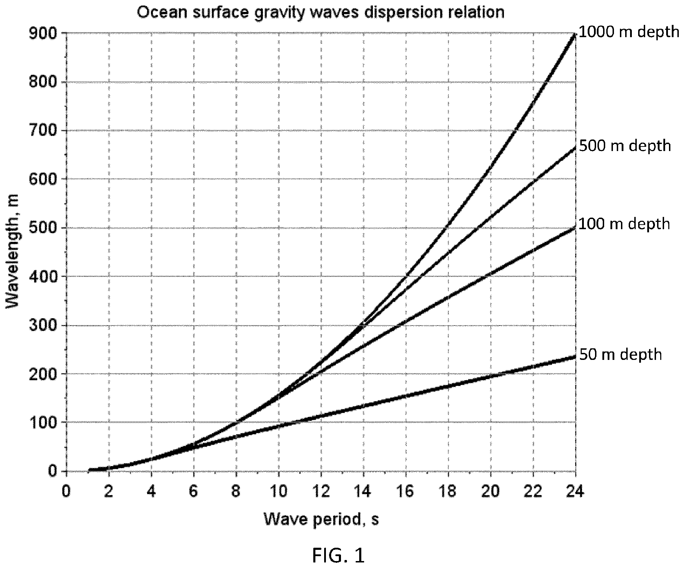

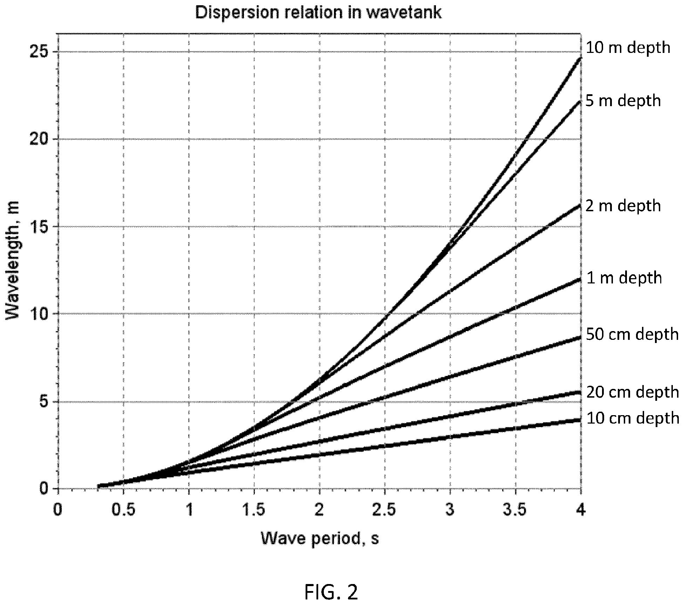

The requirement to excite real waves results in large dimensions for the testing facility, which results in large costs for the testing campaign. The fundamental reason for this is that surface waves can only exist for specific modes. For a certain wave period, a propagating wave solution only occurs for a particular wavelength, which is determined by the phase velocity, itself determined by the depth of the tank: the wave must satisfy the so-called dispersion relation. (In high amplitude waves, non-linearities complicate this, but the same limitations discussed herein apply). A graphical depiction of the dispersion relation for water waves in the ocean is shown in Figure 1. The dispersion relation in dimensions achievable within a wave basin is shown in Figure 2. Wave periods that matter for most marine structures are typically in a range from 3 seconds to 25 seconds. For many structures, design is governed by the largest waves, typically of period above 15 seconds. When doing physical modelling, the wave period is normally scaled as the square root of the scaling of lengths. This preserves, among other things, the ratio of inertial forces to gravity. That is, if the physical model is 1/100^{th} the size of the real structure, wave period must be divided by 10. If the physical model is 1/36^{th} the size of the real structure, wave period must be divided by 6.

From these numbers and Figure 2, it becomes apparent that for most situations of interest, the wavelength of waves that will be excited in the test basin are typically at least a few meters, if not tens of meters in advanced design phases where the physical model may be 1/36^{th} the size of the real structure.

In addition, exciting wave motion from the rim of a basin normally also excites undesired evanescent modes, which attenuate over 2-3 wavelengths away from the wavemaker. This requires positioning the physical model a few wavelengths away from the wavemaker. Reflexion problems at the other end also often require some distance.

The wavelengths of real water waves thus require that to test a physical model of the order of 1 meter, horizontal dimensions of a wave tank must be of tens of meters. Depth must also be of at least a few meters to decently model real-world depths. The basin thus contains several thousand cubic meters of water, which must be put into motion. Energy consumption of the tank may be of the order of 1 megawatt during wave testing in order to move all this water.

Another important limitation is the size of the waves that can be reproduced, since real, propagating waves typically become unstable and break when the wave height is larger than about 70% of the water depth.

Even much before wave breaking, the wave dynamics are strongly influenced by the finite depth. The wavefield becomes significantly different when the depth is smaller than the wavelength. Therefore, another limitation is that it is difficult to reproduce the velocity field that waves have in deep water - that is, waves whose wavelength is smaller than the depth of the water in which the waves propagate. Unfortunately, that is often the desired design situation.

Finally, instrumenting a floating body in the middle of a large body of water is also quite cumbersome, costly, and generally a heavy drag on adaptive and innovative testing campaigns. The tiniest adjustment to the instrumentation setup requires deployment of a small boat and work between two floating platforms. A small tweak to the weight distribution or check on watertightness of the model is equally complicated. Any change to the mooring system requires divers - a significant drag to innovation in mooring systems. This usually requires more time than desired, during which a large testing facility, with consequent staffing and hourly rate, cannot function.

Summarising, the current situation for testing behaviour of marine structures in waves is that:
- It remains a requisite in the design of marine structures.
- Current testing methods rely on exciting a real wave within a water body.
- Because of the physics of real water waves, this results in requirements for very large and costly basins facilities, staffing, complex logistics, etc.
- The resources needed for testing are an important roadblock for many innovations and improvements of marine structures, and marine generators of renewable energy in particular.

Clearly, an innovation that allows wave testing for a fraction of the cost would unlock much innovation potential and deliver important benefits to marine industries. Before presenting said innovation, a brief review of other hydrodynamic testing methods is introduced.

### Other testing methods

### Tow tanks

Tow tanks do not rely on moving water, but instead work by moving the structure through the water. That the equations of motion are the same whether the structure moves relative to the water, or water moves relative to the structure, in other words, that momentum is conserved in any inertial frame, ensures the physical problems are equivalent so long as acceleration of the towed structure is negligible. Tow tanks can have considerably smaller dimensions than wave basins if only hydrodynamic forces resulting from translation are of interest. Or at least, one of the dimensions (the dimension having a direction perpendicular to the direction of the motion of the physical model) may be considerably smaller. However, to model the structure's wave response, a wave must be excited in the water and hence the same size requirements apply as for wave basins.

Inventions offering various improvements to tow-tank testing have been disclosed, including many in recent years. In CN104280206B the physical model is held by a hexapod arm, so that more complex motion can be imposed to the model relative to the water, including reproducing motion resulting from waves such as ship pitch and roll. CN106774362B discloses a novel control method for such motions. CN110207948B adds the possibility of imposing deformation to the physical model (e.g., like a ship that is sagging).

All these improvements share with the first tow-tank system that the model motion is partly or wholly controlled by a towing cable or holder arm. Consequently, its response to hydrodynamic forces, such as resonant response to a wave, or the motion of a ship in response to various sea-states, or response amplitude functions, cannot be analysed. The role of inertial forces, for example, cannot be included in the analysis.

### Decay tests

In decay tests, the physical model is released from an initial non-equilibrium position and resulting oscillations and decay of the resulting oscillations are analysed. Decay tests offer valuable information on the interplay or inertial forces and those resulting from model motion relative to water. However, decay tests do not provide information on response to wave excitation of various frequencies and amplitudes.

### Oscillating body in water

Imposing oscillatory motion to a physical model within water can be used to obtain certain hydrodynamic properties, such as drag and added mass coefficient in oscillatory flow. This is used, for example, to obtain such coefficients for standard shapes, such as cylinders. The physical model's motion is imposed by a holder arm or similar. Consequently, inertial forces from the model's mass and acceleration are taken by the arm, not the water. So again, the body's response to wave excitation cannot be analysed with such method.

### Hexapod testing

inertia! forces and parameters of motion such as inertial moments along various axes can be analysed outside the water by moving the structure in six degrees of freedom with a hexapod or similar machine. But hydrodynamic forces cannot be studied - and the hydrodynamic forces are often the hardest to reliably model.

### Slosh tanks

Slosh tanks are used to study the response of a tank to fluid motion within the tank, or the response of the fluid in the tank to accelerations of the tank. Their current application is completely different from those of wave basins. The novelty of the present invention relative to current slosh tanks will be described with more details after presenting the invention, below.

### Rotating tanks

Non-stationary, rotating tanks provide a compact alternative to large tow tanks. This testing method dates back at least to 1926, when US1953045A disclosed the idea of rotating a ring-shaped water channel, and thus expose a static physical model to this rotating flow. If the dimensions of the ring are large relative to the physical model, the translation flow of a tow tank is approximately reproduced near the model. Several improvements to this system were developed, such as US2585442A where the ring is rotated in a vertical plane, so that centrifugal force can be added to gravity near a model held at the bottom of the ring, thus varying scale factors associated to gravity, such as the Froude number. More recently, DE102011103703B4 added improvement to the holder arm so that the holder arm can move the model in the flow. GB2473430A discloses a method to rapidly mount this type of tanks. None of these tanks and methods are designed to model response to wave forces. Much less would they provide means for doing so without creating a real wave in the tank.

### Summary of other testing methods

Summing up, in the art of hydrodynamic testing of physical models, the only method currently available to study response to wave forces is to actually excite a real water wave and position the physical model in the resulting wavefield. The physics of water waves, and in particular their wavelength, then impose the use of large basins of tens of meters in horizontal dimensions. This causes a high cost of designing new marine structures, and a significant damper to innovation, but no alternative has been made available heretofore

### SUMMARY

A method and apparatus for the hydrodynamic testing of behaviour of objects in flows. In particular, to model the response of an object when exposed to wave forces. Heretofore the physical modelling of response to wave hydrodynamic forces, such as response amplitude and resonance, has relied on exciting and propagating real water waves, albeit at reduced scale. This results in high dimensions for wave testing facilities and large costs for designers of marine structures. However, if an object's dimensions are significantly smaller than the wavelength, the flow near the object can be considered approximately uniform. The flow being nearly uniform on that scale, flow particles in a volume surrounding the object have the same trajectory, moving coherently as a non-mixing Lagrangian volume. A container can be moved like said volume, and fluid within it will thus also move like said volume, so long as said fluid has minimal motion relative to the container. Therefore, an object in this container's fluid would be exposed to the same velocity field, and therefore to the same hydrodynamic forces as in the real flow. For example, the flow of an ocean wave. For many applications, this enables the testing of wave response of physical models using wave tanks with vastly reduced dimensions. The limitation is that the modelled marine structure is small enough relative to the wavelength, so that the wave velocity field near the structure is approximately uniform. Subject to these limitations, the principle of physically modelling only approximately uniform parts of a complex field has broad applicability to the physical modelling of field-structure interaction.

The principle of operation of the method disclosed herein is simplest to illustrate by its most obvious application: to the physical modelling of a marine structure's response to ocean waves. The following section describes this application. Other applications of this novel method will be presented thereafter.

An invention is disclosed herein, that allows testing wave response of many marine structures in tanks that are at least three orders of magnitude smaller in volume.

### Application to ocean surface waves

The novel method exploits the fact that for many applications, the velocity field of an ocean wave near a marine structure can, in fact, be reproduced without creating a real wave.

### Eulerian view: velocity field

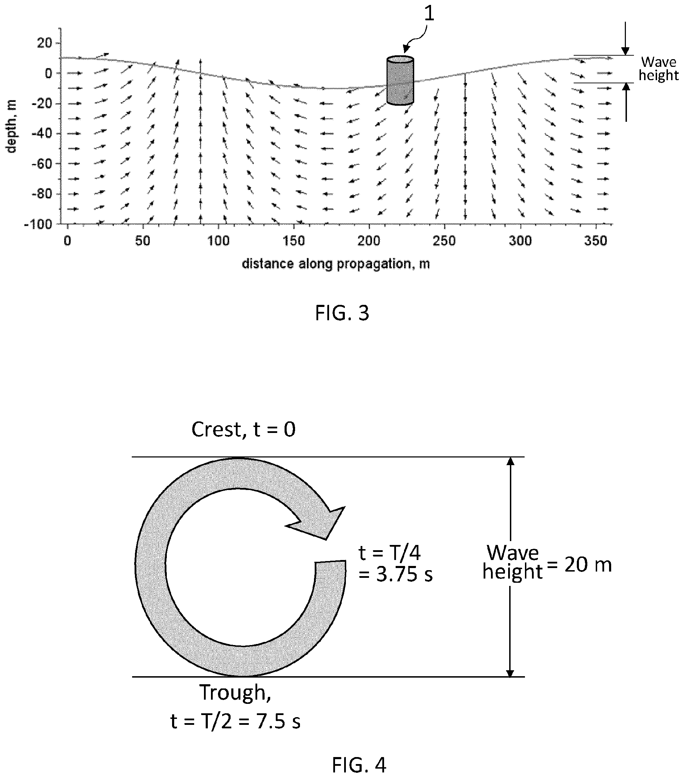

The velocity field in a linear surface gravity wave is illustrated in Figure 3. This is the linear solution (Airy solution) for a wave of period of 15 seconds in deepwater, with corresponding wavelength of 351 m. The wave height is 20 m. This is a large storm wave and rather similar to the design situation governing quite a few marine structures. Depicted is the Eulerian view of the flow: a snapshot of velocity vectors at a particular fixed time. The attenuation with depth is reduced so velocity vectors are easier to see.

For the invention disclosed here, it is worth noting in Figure 3 is that the scale of spatial variation for a wave velocity field may be taken as about one quarter of the wavelength, here some 88 m. Over such a distance, the wavefield indeed changes very significantly. However, over distances small relative to the wavelength, the wave velocity field changes little. For example, a cylinder of diameter 15 m and height 20 m (1) floating in this wavefield near the surface "sees" an approximately spatially uniform velocity field. All the forces exerted from the wavefield on this this cylinder come from a near-uniform velocity near-field. The far-field is irrelevant to the motion of this cylinder. Though varying in time, the velocity field remains spatially uniform near the cylinder (1) through the entire wave period.

### Lagrangian view: trajectories of water "particles"

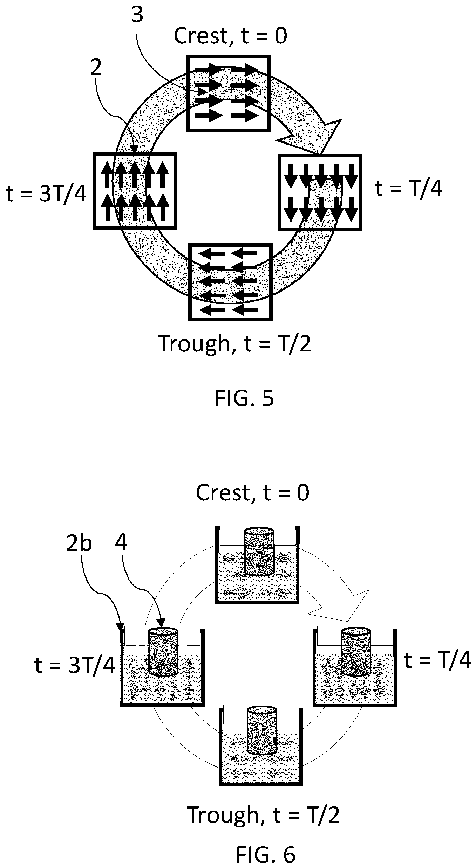

Figure 4 and Figure 5 depict the trajectory of water particles through one wave period for the wave shown in Figure 3. This is the Lagrangian view of the same flow: instead of a snapshot of the velocity field at a particular time, this view is following a water "particle" during a wave period. (Particles here is used in the continuum mechanics sense, small enough for differentiability of terms in momentum equations, but large enough to average out individual molecules movements).

For practical application of the invention disclosed herein, of note here is that the trajectory of water particles is a closed circle of diameter equal to the wave height, not the wavelength. In most situations the wave height is only a few percent of the wavelength (here 20 m vs. 351 m).

In finite depth, the trajectory of particles becomes elliptical, and when waves become non-linear, the trajectory is not quite closed, but that doesn't affect the principle of the method discussed here.

Figure 5 shows the trajectories of water particles within a volume that is small enough (relative to the spatial scale of variation of the wave velocity field) that the particles move approximately in phase. For example, the volume surrounding the floating cylinder (1) of figure 3. As particles move together with uniform velocity particles that are nearby remain nearby at the end of the wave cycle. Hereafter this volume will also be referred to as a "Lagrangian volume", in the sense of a fictitious volume that follows the particles that are within it.

The black box (2) in Figure 5 is just depicting the volume (3) of particles considered to be moving approximately in phase along parallel trajectories. This box is fictitious, but as long as the flow is uniform in this volume, it is clear that it makes no difference to the flow within the box. The trajectories of the water particles within this volume is not affected by whether this box is just a fictitious boundary or an actual box of physical, non-porous walls. We may refer to this box as a "Lagrangian box".

One important aspect of this invention lies in this observation: it makes no difference to a locally uniform velocity field within a volume, that this volume's boundary is fictitious, or instead is real, non-porous boundary walls, as long as these walls are moving also with substantially the same uniform velocity as the particles in the volume within them. (To be more precise, this applies to Newtonian fluids, roughly those where surface tension effects are negligible and friction goes to zero if shear is zero - an excellent approximation for most of hydrodynamics). As long as this condition is fulfilled, it makes no difference either whether on the other side of the wall there is an ocean moving in the wavefield, or, instead, a laboratory technician operating an apparatus. For example, an apparatus that moves the box's walls in precisely the same way as the fictitious boundary in a real ocean wave.

### Modelling of hydrodynamic forces

The velocity field of Figure 5 is not altered if the upper boundary of the box (2b) is open. So long as the velocity field in the box is uniform and substantially equal to the velocity of the lower and lateral walls of the box, this will be the case. Figure 6 shows such a configuration. In addition, a floating cylinder (4) has been placed around the centre of the box.

The motion of such a body is determined by the following four forces: gravity, inertia, buoyancy, and hydrodynamic forces. Gravity and inertial forces are the same (approximately) in the ocean and in a lab, as long as measured in an inertial frame. Buoyancy of a body in water is determined by its shape and its position relative to the free surface, and the free surface moves up and down the same in the model as the surface elevation of the real wave. Hydrodynamic forces are entirely determined by the motion of the fluid relative to the floating body.

It is clear that as long as the velocity field in the volume inside the box (2b) is uniform, none of the terms in the equation of motion of the floating body in Figure 6 are affected by whether the box (2b) is made of fictitious boundaries that are moving with water particles in an ocean wave, or whether this is a real box containing the same volume of water and moving in the same way as the water particles of the fictitious boundary in the ocean. Therefore, subject to the same initial conditions, the body's motion will also be the same. And so will the characteristics of its response to wave excitation.

Further, the standard scaling methods may be applied to this problem as in a standard wave basin. For example, Froude scaling, where a scaled physical model of a real marine structure is used.

### Summary and principle of the novel method for modelling response to ocean waves

The novel method to physically model the response of a structure to ocean waves is summarised in the following steps:
1) Within a volume of dimensions much smaller than the wavelength and water depth, the motion of water due to a wave is approximately uniform.
2) A container can be moved in the same way as the fluid particles in this volume.
3) Water in this container will then move like the water in the real volume in the real wave (as long as its motion relative to the box is negligible).
4) If a physical model of a marine structure is also in this container, water exerts the same forces on it as water in the real wave.

In short, as long as the volume of interest is significantly smaller than the wavelength, the motion of water in a propagating wave can be approximated by that of water in an appropriately moved container, without exciting or propagating any wave. The same goes for forces that are determined by the wave velocity field, such as wave forces.

### Novelty of the principle for hydrodynamic testing

To those familiar with the art of hydrodynamic testing, there should be no doubt about the novelty of the method. However, it is worth explicitly stating the novelty of the invention disclosed herein relative to the state of the art. The same order is followed as regarding existing methods presented above.

Tow tanks: if information on wave response is needed, waves must be created and propagated within the tow tank.

Decay tests: these tests can provide information on parts of the behaviour in waves, but not in response to wave excitation of various frequencies and amplitudes.

Imposing oscillatory motion to a physical model in water cannot provide information on the interplay of inertial and hydrodynamic forces.

Hexapod testing does not provide hydrodynamic forces.

Slosh tanks only provide information on real velocity fields that are created in their entirety within the tank. The central idea of the invention is missing from the current use of slosh tanks: that the entire velocity field need not be re-created, but only a portion of it, so long as over the domain of interest, this velocity field is approximately uniform. For example:
- Slosh tanks are currently only used to physically model flows of spatial scale smaller than the tank - and so cannot be used to model waves longer than the tank, to the contrary of the invention disclosed herein where this is the main purpose.
- The current use of slosh tanks is to excite motion of the fluid inside the tank, relative to the tank's walls - exactly the contrary of the invention disclosed herein, where various contraptions will likely be needed to minimise any relative motion between the fluid and the container.
- Currently, the fluid flow of slosh tanks cannot model any other wave flow than that of real waves that are excited within the slosh tank. Therefore, the same limitations of scale apply as for static wave basins: no information can be obtained on the effect of waves longer than the tank (and in fact any wave at least several times smaller than the tank). This is both for wavelength, and wave height. As shown earlier, the invention disclosed herein allows reproducing the flow of waves much longer than the tank's length, or much higher than the tank's height. Put simply, only the invention disclosed herein can physically model waves that do not exist.
- On a more abstract level, slosh tanks, as are all other existing testing methods, are primarily based on a Eulerian view of the flow. They're used to create a velocity field and analysing hydrodynamic forces resulting from it. The tank is a volume that isn't in any way following the particles of fluid within it. To the contrary, the invention disclosed herein is primarily based on a Lagrangian view of the flow. The tank is following the trajectories of water particles near the object. The wave response of the object is obtained within a volume that follows the same group of fluid particles. The tank is a Lagrangian volume.

Much of the hardware for slosh tanks can indeed be used almost directly as an embodiment of the method proposed herein - but only if the novel principle disclosed herein is applied. In practice, a few modifications will likely be needed, as will be discussed in the possible embodiments section below.

The novelty relative to rotating tanks include:
- All embodiments of rotating tanks require holding the physical model instead of letting it move freely in response to the flow - so again inertial forces are absent from this modelling and wave response cannot be modelled.
- They can only be used to physically model flows that they re-produce in their entirety - albeit in a closed loop. As a consequence, only very simple flows can be modelled (uniform translation). The novel method disclosed herein allows the modelling of only portions of a large and complex velocity field.
- They can only produce flows that have rotational symmetry or at least a rotational periodicity, whereas the novel method disclosed herein can be used to model a portion of any type of flow.
- A wave velocity field can only be obtained by exciting and propagating real waves within the tank, whereas one of the novel method's main applications is to create wave velocity fields without exciting and propagating real waves
- At the conceptual level, the rotating tank is used in a Eulerian framework. The volume of interest, where the physical model is held, is not moving with the fluid particles. It is a Eulerian volume. The invention disclosed herein allows that, and also relies on, the tank following the fluid particles, and the volume of interest is made up of the same group of particles - a Lagrangian view of the flow.

It is clear from the discussion of the differences with existing use of slosh tanks and rotating tanks, that at conceptual level an important novelty of the method disclosed herein is that it is modelling hydrodynamic phenomena within a Lagrangian volume. No other existing method attempts to do this, instead relying on a primarily Eulerian view of the flow - reproducing the flow's velocity field or pressure field within a control volume that is not following the particles. Here it is worth pointing out that since wave forces are pressure forces, they are determined by the flow in the boundary layer of the physical model - i.e., within a few centimetres from the physical model. That is, within a few cubic meters of water, or much less.

The Lagrangian view can be easily applied for physical modelling of any flow on a space and time scale where mixing is negligible (required), and on a scale where it is approximately irrotational (more practical, although flexible or articulated walls may mimic small amounts of rotationality of the boundaries, as discussed in possible embodiments below). It so happens that for many marine structures, the flow for ocean waves of interest to design approximately comply with these requirements. However, Lagrangian volumes may be modelled and used for other flows as well.

### Application of the method to other flows or fields than ocean surface waves

The Lagrangian wave tank may be used to model waves other than surface gravity waves. Motions may also be reproduced of parts of the velocity field of internal gravity waves. Those occur at the interface between two fluids of different density (or within a continuous gradient in density). This is substantially the same physics as surface gravity waves, except that the density difference may be of a few percent between the two fluids, instead of a factor 1000 at the air-sea interface. The small density difference results in much longer periods for the wave modes, as well much larger amplitudes. In the ocean these waves may have amplitudes of tens of meters or more, and periods of some 30 minutes. Slow periods and amplitudes render the physical reproduction in standard (Eulerian) wave basin very difficult, let alone the supply of thousands of cubic meters of fluids of specific density. With a Lagrangian tank, only small volumes of the fluids are needed, and large motion of the container upon long periods is easily modelled in a small laboratory.

The small density difference at the interface between two fluids results in a small "effective gravity", as far as surface/interface gravity waves are concerned. The Lagrangian wave tank may be easily used to produce such interface and analyse wave response in low effective gravity.

From the previous discussion, it is clear that in general, a physical model of any complex flow, highly variable in space and in time, can be reproduced with this method, as long as the volume modelled is small relative to the spatial scale of variation of the flow. In fact, most flows, however complex, usually have a spatial-temporal scale where variations in the velocity field are small. Smoothness or differentiability is indeed the central assumption of continuum mechanics. The flow needs not be a wave, nor does it need to be periodic in time or space (though for practical embodiments it is easier if the trajectories of the flow particles show some degree of periodicity).

As an example of an application very different from ocean waves, the diffusion of particulates (suspended sediments or bubbles) within highly turbulent flow may be physically modelled with a Lagrangian flow tank. The container, in this case, can be moved to reproduce the trajectory of a small volume within an eddy or eddies, again small enough so that the velocity field is approximately uniform within it, and diffusion processes inclusive of inertial effects can be examined within the box.

Further, this principle of physical modelling can be put to use advantageously in fields other than hydrodynamics. For example, to study the behaviour of a structure in any wave field, so long as the structure response is only affected by the near-field, and the structure's dimensions are small relative to the spatial scale of variation of the wave field.

For example, the wavelength of visible light, of about half a micrometre in vacuum, is one thousand to ten thousand times longer than the size of the orbitals of electrons in most atoms. Electrons "see" a substantially spatially uniform electromagnetic field. Therefore, the response of electrons or atoms to visible radiation may be physically modelled by oscillating a spatially uniform electromagnetic field at the required frequency, instead of re-creating a real electromagnetic wave. Such a field may be easily reproduced, for example, with a few capacitors and solenoids in an appropriately phased resonant electronic circuit. Frequency, polarization, and planes of oscillations of the electric and magnetic fields may be easily controlled. In some case this will be advantageous over the requirements of emitting and propagating a real electromagnetic wave. A Faraday cage may be used around this setup to ensure no other electromagnetic radiation contaminates the measurements.

On another scale, radio waves may be of kilometres in length. Man-made radio antennas typically see time-varying but substantially spatially uniform field. Therefore, the interaction of an antenna with radio waves may be physically modelled in a time-varying but spatially uniform field near the antenna, instead of emitting and propagating a real electromagnetic wave. Again, a simple electronic circuit of capacitors and solenoids can be used to re-create precisely the electromagnetic field that real radiation would have near the antenna. And this is likely to allow important simplification of the experimental contraption, since long wavelength radiation is, for example, not highly directional, may reflect or scatter in a laboratory, and may be less straightforward to control at very low or very high power.

Finally, with appropriate scaling laws, scaled models may be used to study the interaction of radiation with objects. For example, with a physical model of dimensions large enough to facilitate manipulation. Macro-scale experiments physically modelling microscopic particles may be possible, preserving, for example, the ratio of electromagnetic to inertial forces.

These applications rely on exactly the same novel principle that was used to model ocean waves: the entire wave field, be it velocity of water particles or electric and magnetic field, need not be reproduced. Only the wave field near the object whose response is studied is relevant. As was the case for ocean waves, the advantage of this approach would be to remove the need to propagate a real wave, electro-magnetic wave in this case. Real propagating waves only occur for certain modes and the experimental setup to excite them, propagate them and generally control them, can be far more complex than that required just to create a locally uniform, time-varying electric or magnetic field.

### Description of aspects of the invention

A first aspect of the present invention relates to a method of physically modelling a velocity field of a portion of a first volume (the first volume is, e.g., a first volume of liquid) by reproducing, or reproducing in a scaled manner, motion of the portion of the first volume, that is, by reproducing, or reproducing in a scaled manner, the motion of particles within the portion of the first volume, the portion of the first volume being small relative to a spatial scale of variation of the velocity field of the first volume, so that the velocity field of the portion of the first volume is substantially uniform with respect to space; the method comprising moving a container containing a physical model of the portion of the first volume (the physical model of the portion of the first volume is, e.g., a liquid), the physical model of the portion of the first volume having small motions relative to the container (that is, the motions of the particles in the container are dominated by the motion of the container, and only marginally influenced by the motion of the particles relative to the container); the container being moved in a way that reproduces the trajectory of the portion of the first volume or reproduces a scaled representation of this trajectory wherein the scaling is based on mathematical relations of physical modelling, so that the model of the portion of the first volume physically models the velocity field of the portion of the first volume.

Thereby, the method allows modelling the velocity field of a first portion of the first volume without requiring modelling a velocity field of other portions adjacent the first portion of the first volume.

In some embodiments, the physical model of the portion of the first volume is a liquid, the liquid contained in the container has a velocity field being substantially uniform with respect to space, and the velocity of the velocity field is substantially equal to the velocity of the container. Obviously, a velocity of a portion of the liquid contained in the container and in contact (e.g., a boundary layer) with a body partly or wholly submerged in the liquid contained in the container is different from the velocity of the uniform velocity field.

In some embodiments, the method is applied to wave motion of the first volume, that is, the method is a method of physically modelling a velocity field of a portion of the first volume subjected to a wave motion, without exciting a real wave (e.g., without exciting a model of the wave motion; the wave motion being, e.g., relative to the container) in the physical model of the portion of the first volume, and the portion of the first volume to be modelled is small relative to the wavelength of the wave, so that an oscillatory motion caused by the wave in the portion of the first volume is substantially uniform with respect to space; the oscillatory motion being substantially modelled in the physical model of the portion of the first volume by the step of moving the container without a need to propagate a real wave in the physical model of the portion of the first volume.

In some embodiments, the method is applied to physical modelling and analysis of interaction between a flow (e.g., a flow of liquid) of the portion of the first volume and a structure at least partially (i.e., partly of wholly) within (e.g., submerged in) the first volume, over a domain where the flow is substantially uniform with respect to space, and tracking particles of the flow; wherein a physical model of the structure is partly or wholly within the physical model of the portion of the first volume.

The flow of the portion of the first volume may vary with time as long as the velocity field of the portion of the first volume is substantially uniform with respect to space at each instant of time.

In some embodiments, only one of the dimensions of motion of the portion of the first volume is modelled and analysed, for example, only heave motion is modelled to obtain a response of an amplitude function of a floating body to heave-only excitation.

Thereby, the method allows modelling a dimension of a motion of the portion of the first volume separately from other dimensions of motion of the first volume.

In some embodiments, the structure to be modelled comprises legs that pierce a surface of the first volume, wherein containers are used to model a wave motion in the first volume, and each container of the containers model a different velocity of fluid; for example, motion of water at different phases of an ocean wave wherein each phase interacts with each of the legs of the structure and wherein the structure is semi-submersible.

In this way, the method allows modelling a physical interaction between a structure and a first fluid, wherein different parts of the structure are subject to different velocity fields of the first fluid.

In some embodiments, each container of the containers contain a physical model of a portion of the first volume; each container of the container is moved in a step of moving the containers so that the physical model of the respective physical model of a portion of the first volume has motions relative to the container, the motions of the respective physical model of a portion of the first volume relative to the respective container being only small; each container of the containers being moved in a way that tracks a trajectory (e.g., follows a scaled trajectory) of the respective portion of the first volume, so that the model of the respective portion of the first volume physically models the velocity field of the respective portion of the first volume.

In some embodiments, the containers are moved, in the step of moving the containers, at the same time.

In some embodiments, the container has one or more degrees of freedom in motion, in addition to the 6 degrees of freedom of a solid body, such as an additional degree of freedom in rotation and/or flexible walls and/or flexible floor.

Thereby, the method allows modelling a more complex velocity field of the portion of the first volume, such as a slope of the free surface of the portion of the first volume, or change of the velocity field with depth.

In some embodiments, the container contains two or more fluids (e.g., liquids) having substantially different density; wherein oscillations at interfaces between the two or more fluids are used to model behaviour of floating structures in substantially lower effective gravity.

In some embodiments, the modelled field is not a velocity field but another force-generating field, such as an electromagnetic field, wherein the portion of the first volume to be modelled is small relative to a spatial scale of variation of the real another force-generating field, and can thus be modelled as a field substantially uniform with respect to space in a physical model of the portion of the first volume, for example, avoiding a need to create a real wave in the physical model of the first portion of the volume, for example, an electromagnetic wave.

A second aspect of the present invention relates to an apparatus for physically modelling a response of a marine structure to waves of a first volume of water, the apparatus comprising:
- a container containing a fluid,
- a physical model of the marine structure, the physical model being partly or wholly in the fluid contained in the container, and
- actuators configured to move the container in a motion that models motion of a portion of the first volume of water due to waves, wherein the portion of the first volume is significantly smaller than a wavelength of the modelled wave or waves, so that a velocity field of the portion of the first volume is substantially uniform, and such that the fluid contained in the container has motions relative to the container that are small, so that the fluid contained in the container and the container can be moved together in a way similar to (e.g., in the same way as) the portion of the first volume in a real wave or waves (i.e., in a way that the fluid contained in the container physically models the velocity field of the portion of the first volume), for example, similar to (e.g., in the same way as) a scaled trajectory of the first volume wherein the scaling is based on mathematical relations of physical modelling.

In some embodiments, the actuators are configured to minimize motion, relative to the container, of the fluid contained in the container by choosing a frequency of motion of the container different than any frequency of a sloshing mode of the container, the container having a shape configured to minimize reflection of waves of the fluid contained in the container, the walls of the container being provided with sieves, flexible membranes and/or other means for dissipation and for minimizing coherent scattering of sloshing modes by the walls of the container.

Thereby, undesired motion of the fluid within the container (e.g., motion of fluid which decreases accuracy of the modelling) may be minimized.

The frequency of motion is, for example, a number of completions, by the container, of a trajectory (e.g., the trajectory having an elliptical shape, for example, a circular shape) per unit of time.

In some embodiments, the container comprises flexible or articulated walls or floor, and actuators configured to move the walls or floor to move, with respect to the container, the fluid contained in the container.

In this way, the apparatus allows modelling more complex motion of the portion of the first fluid, for example, variation of wave amplitude with depth.

In some embodiments, the apparatus comprises parts configured to not to be moved with the same velocity as velocity of movement of the container upon movement of the container caused by the actuators, and the parts are either fixed with respect to a support frame of the apparatus or configured to be moved with respect to the support frame of the apparatus, and wherein these parts are configured to fix or be a physical model of at least one of a mooring line and a bottom-fixed foundation.

In some embodiments, the actuators are configured to be selectively actuated so as to selectively model motion corresponding to particular degrees of freedom of the portion of the first volume, such as only translation along the axis of propagation of the wave (i.e., surge), or only translation in a vertical direction (i.e., heave), or only rotation about the axis of propagation of the wave (i.e., roll), or any combination of said motions.

In this way, the apparatus allows turning on and turning off models of motion of the degrees of freedom, thus allowing a separate analysis of a response of a marine structure to different excitations.

In some embodiments, the actuators are configured to move the container to reproduce motion of water in complex superposition of waves of various frequencies and directions, or configured to move the container to model, at reduced scale in space and/or time, motion of water in complex superposition of waves of various frequencies and directions.

Thereby, complex wave motions may be modelled by the apparatus.

In some embodiments, the method is applied to physically modelling a field other than a velocity field, and a interaction of the field with a structure having dimensions much smaller than the spatial scale of variation of the field, whereby a substantial uniformity of the field near the structure is relied on to physically produce a model of the field near a physical model of the structure, the model of the field being uniform, the method thereby avoiding physically modelling the field over larger spatial scales where the field is not substantially uniform with respect to space.

### BRIEF DESCRIPTION OF THE DRAWINGS

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 diagrammatically shows a relation of ocean surface gravity waves dispersion.
Figure 2 diagrammatically shows a dispersion relation in a wave tank.
Figure 3 schematically shows a deepwater Airy velocity wave having a height of 20 meters, a period of 15 seconds and a wavelength of 351 meters.
Figure 4 schematically shows orbitals: trajectory of water during a wave period.
Figure 5 schematically shows trajectories within a small volume of water during a wave period.
Figure 6 schematically shows a volume of water in a container reproducing the trajectory of water during a wave cycle.
Figure 7 schematically shows an embodiment with 2 degrees of freedom.
Figure 8 schematically shows a static mooring anchor point within a moving container.

### DETAILED DESCRIPTION

The following description is not to be taken in a limiting sense but is given solely for the purpose of describing the broad principles of the invention. Embodiments of the invention will be described by way of example, with reference to the above-mentioned drawings.

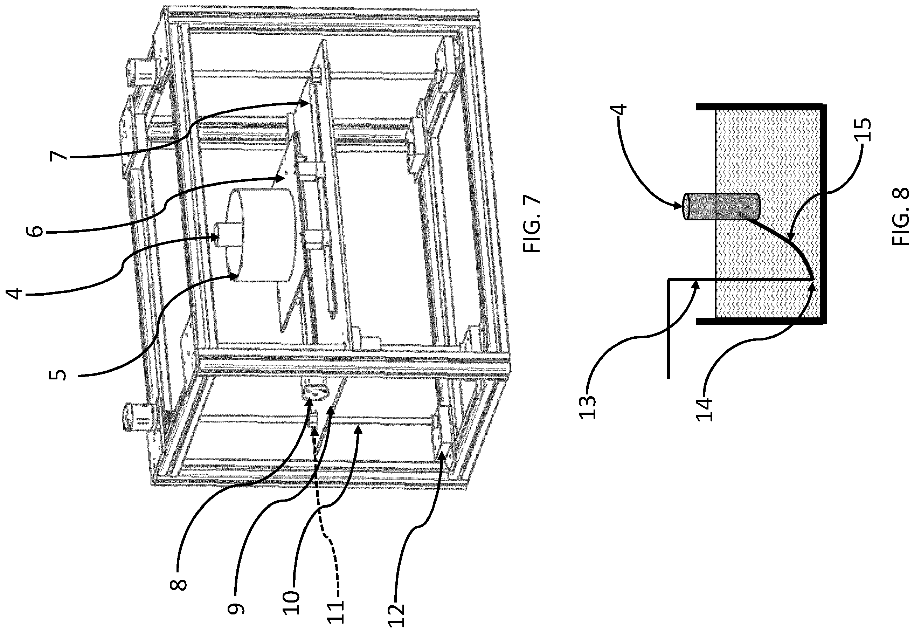

Testing of wave response of structures often has a particular interest in response to excitation in the direction of wave propagation (surge), or in the elevation due to the wave (heave). In this case, a simple, two degrees of freedom implementation of the method is possible. The trajectory of fluid particles are circular (in deepwater) or elliptical orbitals, of the type shown in Figure 4. The apparatus shown in Figure 7 is one possibility. It includes a container (5) containing water, within which a physical model of a cylinder (4) is floating. The container is installed on a plate (6). The plate is supported by rails (7), that permit the translation back and forth (the first degree of freedom in the motion of the container) of the plate (6). An electrically powered linear actuator (8) can move the plate (6) along the rails (7) at the required frequency, speed, and amplitude, to model the motion in the horizontal dimensions of fluid particles in the flow being modelled. The rails (7) and the linear actuator (8) rest on a plate (9) that is itself supported by threaded bars (10) through threaded bolts (11). When electric motors (12) are rotated, the plate (9) is therefore translated up and down at a frequency, speed, and with an amplitude that can be controlled by the motors (12). This is the second degree of freedom in the motion of the container. The apparatus shown in Figure 7 can be used to move the container (5) in the same way as a group of nearby water particles in a real ocean wave, for example, those near a floating cylindrical marine structure.

Dimensions of the apparatus may be as follows in Figure 7 may be as follows. In the early design phases, tank testing at 1/100th scale is commonly used. For example, for a cylinder whose real diameter is 5 metres, the physical model (4) would have a diameter of 5 centimetres. The container (5) may have 6 times the diameter of the structure, say 30 centimetres, in order to allow for free motion of the cylinder. When modelling a 20 metres wave at 1/100th scale, the wave will be modelled as having 20 centimetres. The orbitals of water particles near the surface thus have a diameter of 20 metres in the real waves, 20 centimetres in the physical model. The threaded bars (10) thus need to allow motion of at least 20 centimetres, which is easily achieved with bars of some 80 centimetres. Likewise, the rails (7) need to be at least 20 centimetres in length to model this wave, 50 centimetres will be sufficient to model any real wave at 1/100th scale.

Regarding the time dimensions, a commonly used scaling for time is that it scales as the square root of the scale factor. This keeps, among other things, the same ratio of inertial forces to gravity. This is also how resonant hydrostatic periods and rigidity scale. So in this case, a 15 second wave will be modelled as a 1.5 second wave.

In advanced design phases, physical modelling in wave basins is commonly done at 1/36th scale. Modelling a 20 metres wave with the apparatus in Figure 7 would require moving the container (5) in a circle of diameter 20/36 = 0.55 meters, which is still quite easily achievable in a standard laboratory room. This circle would be completed in 15/6 = 3.3 seconds when modelling a 15 second wave. While the apparatus shown in Figure 7 would be easily scaled to achieve these dimensions, it is worth mentioning that wave heights of 0.5 meters are already in a range that only the largest and most expensive wave basins in the world may achieve. But it is easy to see that the apparatus in Figure 7 can easily be scaled to reproduce orbitals of diameters of 3 meters in a standard laboratory room. And this is much beyond anything achievable even in the largest wave-basin facilities in the world, that are housed in facilities spanning one acre or more. Therefore, the apparatus drawn in Figure 7 can be used to test physical models at scale factors or sea-states heretofore unexplored. And with comparatively modest resources.

An apparatus to achieve the full 6 degrees of freedom from wave motion could be built in a very similar way, just with more actuators. Alternatively, the container may be simply set atop an off-the-shelf hexapod. The hexapod may coordinate the linear motion of 6 actuators to achieve the desired 6 degrees of freedom. The container would preferably have dimensions larger than about 10 cm if surface tension effects are not considered. Beyond 1 m in horizontal dimensions, costs with off-the-shelf hexapods may increase significantly.

The depth of the container can be varied, it should be sufficient to accommodate heaving (vertical response) motion from the model object being tested. It may be preferable to calculate resonant modes of the water in the container and adjust the depth, so the velocity of surface waves in the box is such that there are no resonant modes (sloshing modes) near the period of motion to be modelled.

In general, one of the key outputs of current wave-basin testing campaigns are the so-called response amplitude operators (RAOs). These relate the structures oscillations amplitude in its 6 solid-body motion modes, to the amplitude of the 6 degrees of freedom of the fluid motion near the body. RAOs are based on linear theory where superposition of excitations and response is possible. Linear approximation is well suited to be modelled with a Lagrangian approach.

Further, obtaining RAOs requires the analysis and decomposition of the response along the traditional 6 modes, in addition to requiring linear assumptions, can become complicated for complex wavefields. This cannot be avoided with the heretofore only method of exciting real water waves: real water waves will always include components of heave, surge, and pitch in unidirectional waves. In multidirectional waves, all six modes are excited by the same wavefield. This is a complication that is easily avoided with a Lagrangian wave tank. The structure may be, for example, excited only in heave, to first obtain the response to heave only. This is a feature that cannot be obtained with the current methods of exciting real water waves. As such, this may be an interesting feature of a Lagrangian wave tank for many applications.

It may be advantageous to use counterweights to reduce energy consumption for moving the container. For example, a counterweight just balancing the container and fluid weight may be used, and the ensemble may be rotated in a circular motion, with reduced energy requirements than if actuators were to work also against gravity. Pulleys, gears, or converters of various types of motions may be added to the setup. In some cases, it may be simpler to use a spring rather than a counterweight, wherein the spring would just balance the weight of the container and fluid, so that actuators need only provide the force necessary to accelerate the container and not the force to counteract gravity. Some arrangements may also be conceived where the springs can be used to balance also inertial forces, for example, by setting the natural period to that of the modelled wave motion.

In many applications, it may be important to minimize excitation of sloshing inside the container. Therefore, the motion of the actuator should be smooth, in particular, time rate of change of inertial forces or acceleration (jerk or jolt), and further time-derivatives of the position should be minimized. Also, it may be important to maximise dissipation of sloshing modes inside the container. Common strategies to damp wave excitation in static wave tanks may be useful, such as non-flat container sides, flexible and absorbing walls, sieves, beaches, overflow rims, or more sophisticated active damping systems. In general, the container should be as closed as possible, including its top surface, while still allowing free motion of the physical model, so as to ensure as much of the fluid is moved in a uniform velocity field with the container. In other arrangements, flat springs (low rigidity springs) may be used to smooth out any jerking from the actuators and avoid excitation of high frequency slosh modes within the container.

Similarly, it may be advantageous in some cases to reduce the change in water surface elevation due to the volume of water displaced by the physical model's presence in the water (and changes thereof if the model is moving relative to the water surface). This could be achieved by rims that let water overflow at the required height, or ports with the same function, or a variety of other mechanisms.

In some applications, it may be important to measure how the physical model to be tested modifies the fluid flow. For example, an oscillating floating body can radiate gravity waves, and this can be of interest in assessing the body's response to wave, wave drag, or capture of wave energy by the floating body. In general, the method is more suitable for bodies that are small relative to the wavelength, where such diffraction and radiation effects are small. But some implementation of the novel method may include sensors to measure the fluid motions resulting from the physical model's motion relative to the fluid in the container, such as changes in the fluid surface height or inclination.

In some applications, it may be useful to reduce sloping of the water surface inside the tank. In general, the method is simplest to use in linear wave modelling, in which slope remains small. This is expected to be the case as long as the container's accelerations remain small compared to gravity. In other applications, this slope may be used as a parameter of the hydrodynamic testing.

For many applications, one or more static points may be useful. For example, to test the behaviour of a moored floating structure, the anchor points should be static and not move with the container. This can be achieved in various ways, one is depicted in Figure 8, in which a static frame (13), of negligible drag with the fluid inside the moving container, provides a fixed anchoring point (14) for the physical model of mooring line (15). In this way, physically modelling a moored floating structure (4) is possible.

Still other applications may include a static dyke, for example, those used to house wave energy converter devices in breakwater. A model dyke may be held statically in the fluid within the container in the same way as the anchor point is held static in Figure 8.

The particular case of modelling a semi-submersible structure that is of non-negligible dimensions relative to the wavelength could use three or more apparatuses such as the one depicted in Figure 7, one for each leg of the platform. If each leg is a cylinder of diameter that is small relative to the wavelength, each leg sees a nearly uniform nearfield. In this way, different phases of a single wave, or different points of wavefield made of many waves of various frequencies and direction, may be physically modelled by each of the containers.

The container may have flexible walls or a flexible bottom. Flexible walls may be moved by actuators to reproduce slightly non-uniform motion of particles. For example, at the boundaries of a Lagrangian volume within the container. This can be used, for example, to model slight changes with depth of the amplitude of orbitals. The container may also be made of several parts in motion relative to each other, such as pistons, to allow representation of more complex motion within the fluid.

The apparatus in Figure 7 may be installed, in its entirety, on rotating platform, for example in a horizontal plane. This can be used to add centrifugal forces to gravity and obtain hyper-gravity conditions. This can be used to change scaling laws. The fluid within the container may also be changed for denser or less dense fluid to control various hydrodynamic parameters.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method of physically modelling a velocity field of a portion of a first volume by reproducing, or reproducing in a scaled manner, the motion of the portion of the first volume, that is, by reproducing, or reproducing in a scaled manner, the motion of particles within the portion of the first volume, the portion of the first volume being small relative to the spatial scale of variation of the velocity field of the first volume, so that the velocity field of the portion of the first volume is substantially uniform with respect to space; the method comprising moving a container (5) containing a physical model of the portion of the first volume, the physical model of the portion of the first volume having small motions relative to the container (5); the container (5) being moved in a way that reproduces the trajectory of the portion of the first volume or reproduces a scaled representation of this trajectory wherein the scaling is based on mathematical relations of physical modelling, so that the model of the portion of the first volume physically models the velocity field of the portion of the first volume.

2. The method of claim 1 applied to wave motion of the first volume, that is, a method of physically modelling a velocity field of a portion of the first volume subjected to a wave motion, without exciting a real wave in the physical model of the portion of the first volume, and the portion of the first volume to be modelled is small relative to the wavelength of the wave, so that an oscillatory motion caused by the wave in the portion of the first volume is substantially uniform with respect to space; the oscillatory motion being substantially modelled in the physical model of the portion of the first volume by the step of moving the container (5) without a need to propagate a real wave in the physical model of the portion of the first volume.

3. The method of claim 1 or 2 applied to physical modelling and analysis of interaction between a flow of the portion of the first volume and a structure (1) at least partially within the first volume, over a domain where the flow is substantially uniform with respect to space, and tracking particles of the flow; wherein a physical model (4) of the structure (1) is partly or wholly within the physical model of the portion of the first volume.

4. The method of any one of the preceding claims, wherein only one of the dimensions of motion of the portion of the first volume is modelled and analysed, for example, modelling only heave motion to obtain a response of an amplitude function of a floating body to heave-only excitation.

5. The method of claim 3, wherein the structure to be modelled comprises legs that pierce a surface of the first volume, wherein containers are used to model a wave motion in the first volume, and each container of the containers model a different velocity of fluid; for example, motion of water at different phases of an ocean wave wherein each phase interacts with each of the legs of the structure and wherein the structure is semi-submersible.

6. The method of any one of the preceding claims, wherein the container (5) has one or more degrees of freedom in motion, in addition to the 6 degrees of freedom of a solid body, such as an additional degree of freedom of rotation and/or flexible walls and/or flexible floor.

7. The method of any one of the preceding claims, wherein the container contains two or more fluids having substantially different density; wherein oscillations at interfaces between the two or more fluids are used to model behaviour of floating structures in substantially lower effective gravity.

8. The method of claim 1 or 3, wherein the modelled field is not a velocity field but another force-generating field, such as an electromagnetic field, wherein the portion of the first volume to be modelled is small relative to the spatial scale of variation of the force-generating field, and can thus be modelled as a field substantially uniform with respect to space in a physical model of the portion of the first volume, for example, avoiding a need to create a real wave in the physical model of the first portion of the volume, for example, an electromagnetic wave.

9. An apparatus for physically modelling a response of a marine structure to waves of a first volume of water, the apparatus comprising: a container (5) containing a fluid, a physical model (4) of the marine structure partly or wholly submerged in the fluid contained in the container (5), and actuators (8, 12) configured to move the container in a motion that models motion of a portion of the first volume of water due to waves, wherein the portion of the first volume is significantly smaller than a wavelength of the modelled wave or waves, so that a velocity field of the portion of the first volume is substantially uniform, and such that the fluid contained in the container (5) has motions relative to the container (5) that are small, so that the fluid contained in the container (5) and the container can be moved together in a way similar to the portion of the first volume in a real wave or waves, for example, similar to a scaled trajectory of the first volume wherein the scaling is based on mathematical relations of physical modelling.

10. The apparatus of claim 9, wherein the actuators (8, 12) are configured to minimize motion, relative to the container (5), of the fluid contained in the container (5) by choosing a frequency of motion of the container (5) different than any frequency of a sloshing mode of the container (5), the container (5) having a shape configured to minimize reflection of waves of the fluid contained in the container (5), the walls of the container being provided with sieves, flexible membranes and/or other means for dissipation and for minimizing coherent scattering of sloshing modes by the walls of the container (5).

11. The apparatus of claim 9 or 10, wherein the container (5) comprises flexible or articulated walls or floor, and actuators configured to move the walls or floor to move, with respect to the container (5), the fluid contained in the container.

12. The apparatus of any one of claims 9-11, wherein the apparatus comprises parts (13) configured to not to be moved with the same velocity as velocity of movement of the container (5) upon movement of the container (5) caused by the actuators, and the parts (13) are either fixed with respect to a support frame of the apparatus or configured to be moved with respect to the support frame of the apparatus, and wherein the parts (13) are configured to fix a physical model of at least one of a mooring line and a bottom-fixed foundation.

13. The apparatus of any one of claims 9-12, wherein the actuators (8, 12) are configured to be selectively actuated so as to selectively model motion corresponding to particular degrees of freedom of the portion of the first volume, such as only translation along the axis of propagation of the wave (i.e., surge), or only translation in a vertical direction (i.e., heave), or only rotation about the axis of propagation of the wave (i.e., roll), or any combination of said motions.

14. The apparatus of any one of claims 9-13, wherein the actuators (8, 12) are configured to move the container (5) to reproduce motion of water in complex superposition of waves of various frequencies and directions, or configured to move the container (5) to model, at reduced scale in space and/or time, motion of water in complex superposition of waves of various frequencies and directions.

15. The method of claim 1, applied to physically modelling a field other than a velocity field, and an interaction of the field with a structure having dimensions much smaller than the spatial scale of variation of the field, whereby a substantial uniformity of the field near the structure is relied on to physically produce a model of the field near a physical model of the structure, the model of the field being uniform, the method thereby avoiding physically modelling the field over larger spatial scales where the field is not substantially uniform with respect to space.
